# FASCICULE DE BREVET EUROPEEN

(11) **EP 4 584 111 B1**
(45) Date de publication et mention de la délivrance du brevet: **09.09.2026**
(21) Numéro de dépôt: 23752003.6
(22) Date de dépôt: 05.07.2023
(51) Int. Cl.: B60K 35/22, B60K 35/28

(54) **PROCÉDÉ ET DISPOSITIF DE PRÉSENTATION DE LA LONGUEUR D'UN D'OBJET DÉPASSANT DE L'ARRIÈRE D'UN VÉHICULE AUTOMOBILE**
VERFAHREN UND VORRICHTUNG ZUR DARSTELLUNG DER LÄNGE EINES AUS DEM HECK EINES KRAFTFAHRZEUGS HERVORSTEHENDEN OBJEKTS
METHOD AND DEVICE FOR PRESENTING THE LENGTH OF AN OBJECT PROTRUDING FROM THE REAR OF A MOTOR VEHICLE

(30) Priorité: 06.09.2022 FR 2208896
(43) Date de publication de la demande: 16.07.2025
(73) Titulaire: Stellantis Auto SAS, 78300 Poissy (FR)
(72) Inventeur: BUSSON, Yvan, 25200 MONTBELIARD (FR); CLAUDE, Emmanuel, 25200 MONTBELIARD (FR)
(74) Mandataire: ESIP
(86) Numéro de dépôt international: PCT/FR2023/051028
(87) Numéro de publication internationale: WO 2024/052601

(56) Documents cités:
- EP-A1- 1 717 757
- US-A1- 2018 050 637
- US-B2- 7 068 289

## Description

### Domaine technique

La présente invention se rapporte à un procédé et un dispositif de présentation de la longueur d'un objet dépassant de l'arrière d'un véhicule automobile.

### État de la technique

Les utilisateurs d'un véhicule utilitaire tel qu'une camionnette, un fourgon, etc. ont souvent besoin de transporter des objets de grande longueur. Ceux-ci sont alors installés dans la partie utilitaire du véhicule et dépassent à l'arrière de celui-ci.

Or les règles de conduite, telles que le code de la route français, imposent des limites précises à ce type de dépassement. Ainsi le code de la route français dispose qu'aucun chargement ne peut dépasser l'avant du véhicule et qu'à l'arrière, dès que le dépassement est supérieur à 1m, le chargement doit comporter une signalisation à son extrémité. Dans tous les cas, le chargement ne peut jamais dépasser de plus de 3m. Ce type de règle, avec des variantes, se retrouve dans la plupart des pays.

Aussi, actuellement, un utilisateur ayant un tel chargement à transporter doit, après l'avoir installé, vérifier avec un mètre que les distances réglementaires sont bien respectées.

Ceci peut être consommateur de temps et aussi source d'oubli ou d'erreur.

Il existe donc un réel besoin d'un procédé et dispositif d'aide à la mesure de tel chargement.

En outre, l'état de la technique est connu des documents US7068289 B2, US2018/050637 A1 et EP1717757 A1.

### Description de l'invention

Pour résoudre un ou plusieurs des inconvénients cités précédemment, selon un premier mode de réalisation, un procédé de présentation de la longueur d'un objet dépassant de l'arrière d'un véhicule automobile, comprend les étapes de :
- acquisition d'une image de l'environnement extérieur arrière proche du véhicule ;
- présentation de l'image sur un écran disposé au niveau du poste de conduite du véhicule ;
le procédé est caractérisé en ce qu'il comprend en outre une étape de :
- présentation sur l'écran d'un symbole matérialisant les longueurs limites autorisées pour un objet dépassant de l'arrière du véhicule.

Ainsi, le conducteur du véhicule voit immédiatement, quand il est dans le poste de pilotage, si le chargement de grande longueur est conforme au code de la route.

Des caractéristiques ou des modes de réalisation particuliers, utilisables seuls ou en combinaison sont :
- Le symbole comprend au moins une première ligne symbolisant la longueur à partir de laquelle l'objet doit comporter un signal d'alerte à son extrémité et une seconde ligne symbolisant la longueur maximale autorisée pour un dépassement ;
- Le véhicule comprenant un ouvrant à l'arrière du véhicule, le symbole n'est présenté que sur détection que l'ouvrant est en position ouverte ;
- Le symbole est présenté pendant un temps prédéterminé ;
- Le symbole est présenté de façon périodique ; et/ou
- Le procédé comprend une étape préalable de calibration comprenant la mise en place d'un objet avec la longueur de signalisation et la longueur maximale étalonnées et de la détection de la position sur l'écran des longueurs étalonnées.

Dans un second mode de réalisation, un dispositif de de présentation de la longueur d'un objet dépassant de l'arrière d'un véhicule automobile, comprend :
- un capteur d'image de l'environnement extérieur arrière proche du véhicule ;
- un afficheur de l'image disposé au niveau du poste de conduite du véhicule ;
le dispositif est caractérisé en ce que :
- l'afficheur est adapté pour présenter sur l'image un symbole matérialisant les longueurs limites autorisées pour un objet dépassant de l'arrière du véhicule.

Dans un troisième mode de réalisation, un véhicule automobile comprend un dispositif selon le second mode de réalisation.

Dans un quatrième mode de réalisation, un programme d'ordinateur comprend des instructions pour mettre en œuvre les étapes d'un procédé de présentation tel que défini ci-dessus lors d'une exécution du programme par une unité de calcul dudit appareil.

### Brève description des figures

L'invention sera mieux comprise à la lecture de la description qui suit, faite uniquement à titre d'exemple, et en référence aux figures en annexe dans lesquelles :
[Fig 1] représente une vue de côté d'un véhicule utilitaire ayant un dispositif de présentation selon un mode de réalisation ;
[Fig 2] représente une vue de l'écran d'affichage selon le mode de réalisation de la Fig 1 ; et
[Fig 3] représente un ordinogramme d'un mode de réalisation d'un procédé de présentation.

### Modes de réalisation

Les modes de réalisation présentés ci-après font référence à un véhicule automobile de type camionnette ou fourgon. Cependant l'homme du métier comprend que ceux-ci sont également utilisables avec d'autres types de véhicule tels que les pickups, les vans, etc.

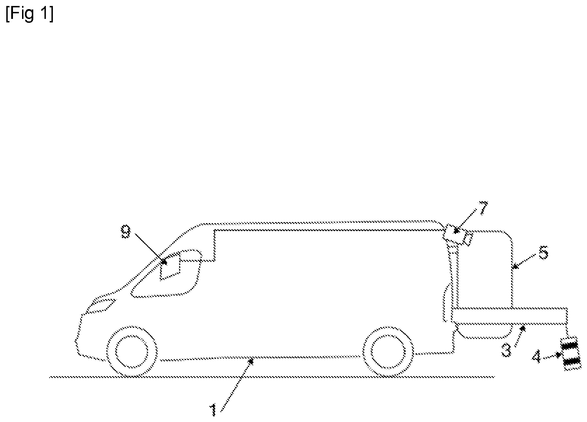

En référence à la Fig 1, un véhicule 1 transporte un chargement de grande longueur 3, par exemple des madriers, des planches, des tiges en fer, etc.

À son extrémité, le chargement 3 a une signalisation de grande longueur 4.

De ce fait, un ouvrant 5, ici une porte arrière ou un de ses battants, est laissé en position ouverte.

Le véhicule 1 comprend un capteur, par exemple une caméra, 7 d'un flux d'images de l'environnement arrière du véhicule, y compris son environnement immédiat. Ce capteur 7 est connecté à un afficheur 9 d'images tel qu'un écran à cristaux liquides positionné dans la cabine pour permettre au conducteur du véhicule de voir le flux d'images capté par la caméra 7. La caméra 7 et l'écran 9 constituent, par exemple, un rétroviseur électronique, accessoire de plus en plus souvent proposé lors de l'achat d'un véhicule utilitaire, car améliorant significativement la vue du conducteur sur son environnement arrière.

Le champ de vision de la caméra 7 comprend la zone dans laquelle le chargement de grande longueur 3 sort du véhicule 1.

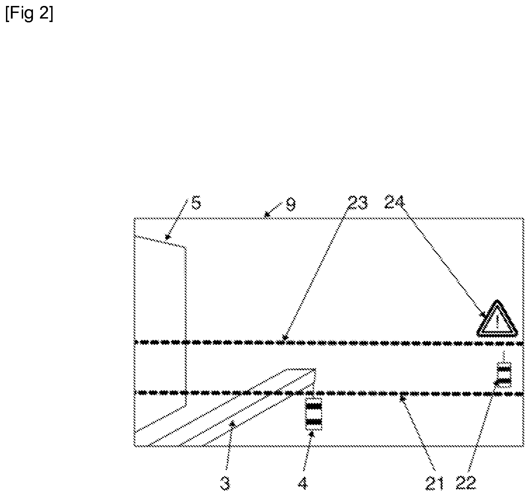

L'afficheur 9 comprend également des moyens d'affichage d'un symbole matérialisant les longueurs limites autorisées pour un objet dépassant de l'arrière du véhicule. Typiquement, Fig 2, ce symbole se compose de deux barres 21, 23 délimitant d'une part la longueur 21 à partir de laquelle une signalisation doit être présente et d'autre part la longueur maximale autorisée 23. La barre 21 est associée à un symbole de signalisation 22 et la barre 23 est associée à un symbole d'alerte 24.

Ainsi, le conducteur du véhicule, en regardant l'écran 9 sait immédiatement si son chargement est correctement signalé. C'est le cas de l'exemple de la Fig 2 puisque l'extrémité du chargement 3 se trouve entre la ligne 21 et la ligne 23 et est équipée de la signalisation 4.

Il est à noter que la Fig 2 ne présente que les éléments essentiels dans un but pédagogique. Dans un contexte réel, l'écran 9 étant celui d'un rétroviseur électronique, les éléments de la Fig 2 se superposeront à une vue de l'environnement arrière du véhicule.

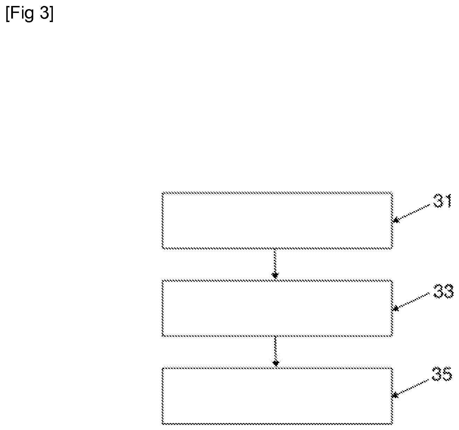

Le fonctionnement du dispositif se comprend donc comme l'enchainement des étapes suivantes, Fig 3 :
- acquisition 31 d'une image de l'environnement extérieur arrière proche du véhicule avec la caméra 7 ;
- présentation 33 de l'image sur un écran 9 disposé au niveau du poste de conduite du véhicule ; et
- présentation 35 sur l'écran d'un symbole 21, 23 matérialisant les longueurs limites autorisées pour un objet dépassant de l'arrière du véhicule.

Cependant, de nombreuses variantes et optimisations sont possibles.

Une première variante consiste à n'afficher le symbole 21, 23 qu'à la réception d'un ordre du conducteur, par exemple, sur une demande vocale ou par appui sur un bouton prédéterminé. Ceci à l'avantage de libérer l'espace de présentation de l'image quand la présence du symbole n'est pas ou plus utile. En effet, une fois le chargement installé et pendant la conduite, le conducteur n'a pas besoin d'un rappel permanent des longueurs externes autorisées.

Dans une autre variante qui peut être combinée avec la première variante, le symbole n'est présenté que pendant un temps prédéterminé. Par exemple, pendant les premières minutes suivant le démarrage du véhicule ou pendant quelques minutes après réception de l'ordre d'affichage du symbole.

Une variante consiste alors à n'afficher le symbole que si l'ouvrant 5 est détecté en position ouverte.

Le symbole peut également être affiché de façon périodique. Cela présente l'avantage de permettre au conducteur de vérifier que son chargement n'est pas en train de glisser.

Le positionnement du symbole sur l'écran 9 peut être réalisé de différentes façons. Une manière aisée et peu onéreuse se base sur le fait que, dans une série de véhicules identiques, la caméra 7 aura toujours la même position et le même champ de vision, quel que soit le véhicule.

Une étape de calibration est alors réalisée sur un véhicule en mettant en place un objet avec la longueur de signalisation et la longueur maximale étalonnées et en détectant la position sur l'écran des longueurs étalonnées.

La Fig 1 illustre un dispositif selon un certain mode de réalisation. Le découpage présenté a un but pédagogique pour mettre en avant les différentes fonctions. Cependant, on comprend que chaque bloc peut être implémenté en utilisant différents moyens ou leurs combinaisons, tels que des composants matériels, du logiciel, un ou plusieurs calculateurs et/ou des circuits électroniques. Chacun des composants peut inclure au moins un calculateur ou une unité de contrôle-commande. Au moins une mémoire peut être comprise dans chaque composant. La mémoire peut inclure des instructions de programme d'ordinateur ou du code logiciel.

Les calculateurs peuvent être réalisés par n'importe quel type de dispositif de traitement de données, tel qu'une unité centrale de calcul, un processeur de traitement de signal, un circuit intégré d'application spécifique, un réseau de portes programmable, etc. Les calculateurs peuvent être réalisés sous forme d'un unique contrôleur, ou d'une pluralité de contrôleurs ou de calculateurs.

Les différents modules sont connectés entre eux par des liaisons de données adaptées à l'environnement. Celles-ci peuvent être de type filaire ou sans-fil.

Pour le logiciel, l'implémentation peut comprendre des modules ou unités répartis sous forme de procédures, fonctions, etc. Les mémoires peuvent être n'importe quel type de circuit de stockage. Elles peuvent faire partie du circuit du processeur, ou en être séparées et connectées via des liaisons électriques de donnée. Cela peut être des mémoires de type non volatiles, des disques durs, des mémoires vives, des mémoires flash, etc.

De plus, les instructions de programme stockées dans la mémoire et traitées par les calculateurs peuvent être n'importe quel type de code de programme, par exemple, un programme compilé ou interprété écrit dans un langage de programmation adapté.

Les instructions de programme d'ordinateur stockées dans la mémoire sont telles que, quand elles sont exécutées par le calculateur, ce dernier réalise une ou plusieurs des étapes des procédés décrits ci-dessus.

L'invention a été illustrée et décrite en détail dans les dessins et la description précédente. Celle-ci doit être considérée comme illustrative et donner à titre d'exemple et non comme limitant l'invention a cette seule description. De nombreuses variantes de réalisation sont possibles.

Par exemple, le mode de réalisation décrit et ses variantes supposent que le chargement de grande longueur repose sur le plancher de l'utilitaire. Le dispositif et le procédé décrits peuvent également fonctionner pour un chargement de grande longueur fixé sur le toit de l'utilitaire à partir du moment où le champ de vision de la caméra 7 inclut l'extrémité d'un tel chargement.

De même, le procédé et le dispositif décrits peuvent s'appliquer à des véhicules ayant différents types d'ouvrants 5 : une porte unique ou 2 portes, un rideau métallique, un hayon, etc.

## Revendications

1. Procédé de présentation de la longueur d'un objet dépassant de l'arrière d'un véhicule automobile, le procédé comprenant les étapes de :
• acquisition (31) d'une image de l'environnement extérieur arrière proche du véhicule ;
• présentation (33) de l'image sur un écran disposé au niveau du poste de conduite du véhicule ;
le procédé est **caractérisé en ce qu'**il comprend en outre une étape de :
• présentation (35) sur l'écran d'un symbole matérialisant les longueurs limites autorisées pour un objet dépassant de l'arrière du véhicule.

2. Procédé selon la revendication 1, **caractérisé en ce que** le symbole comprend au moins une première ligne symbolisant la longueur à partir de laquelle l'objet doit comporter un signal d'alerte à son extrémité et une seconde ligne symbolisant la longueur maximale autorisée pour un dépassement.

3. Procédé selon l'une quelconque des revendications précédentes, **caractérisé en ce que** le véhicule comprenant un ouvrant à l'arrière du véhicule, le symbole n'est présenté que sur détection que l'ouvrant est en position ouverte.

4. Procédé selon l'une quelconque des revendications précédentes, caractérisé à ce que le symbole est présenté pendant un temps prédéterminé.

5. Procédé selon la revendication 4, **caractérisé en ce que** le symbole est présenté de façon périodique.

6. Procédé selon l'une quelconque des revendications précédentes, **caractérisé en ce qu'**il comprend une étape préalable de calibration comprenant la mise en place d'un objet avec la longueur de signalisation et la longueur maximale étalonnées et de la détection de la position sur l'écran des longueurs étalonnées.

7. Dispositif de présentation de la longueur d'un objet dépassant de l'arrière d'un véhicule automobile, le dispositif comprenant :
• un capteur d'image (7) de l'environnement extérieur arrière proche du véhicule ;
• un afficheur (9) de l'image disposé au niveau du poste de conduite du véhicule ;
le dispositif est **caractérisé en ce que** :
• l'afficheur est adapté pour présenter sur l'image un symbole (21, 23) matérialisant les longueurs limites autorisées pour un objet dépassant de l'arrière du véhicule.

8. Véhicule automobile comprenant un dispositif selon la revendication 7.

9. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en œuvre du procédé de présentation selon l'une au moins des revendications 1 à 6

## Patentansprüche

1. Verfahren zur Darstellung der Länge eines sich über das Heck eines Kraftfahrzeugs hinaus erstreckenden Gegenstandes, wobei das Verfahren die folgenden Schritte umfasst:
• Aufnahme (31) eines Bildes der hinteren Außenumgebung in der Nähe des Fahrzeugs;
• Darstellung (33) des Bildes auf einem Bildschirm in Höhe des Fahrersitzes des Fahrzeugs;
Das Verfahren ist **dadurch gekennzeichnet, dass** es ferner einen Schritt umfasst:
• Anzeige (35) eines Symbols auf dem Bildschirm, das die zulässigen Längenbegrenzungen für einen Gegenstand darstellt, der das Heck des Fahrzeugs überschreitet.

2. Verfahren nach Anspruch 1, wobei das Symbol mindestens eine erste Zeile, die die Länge symbolisiert, ab der das Objekt ein Warnsignal an seinem Ende aufweisen muss, und eine zweite Zeile, die die maximale Länge symbolisiert, die für eine Überschreitung zulässig ist, umfasst.

3. Verfahren nach Anspruch 1, wobei das vorhergehende Fahrzeug eine Tür im hinteren Teil des Fahrzeugs umfasst, wobei das Symbol nur bei der Feststellung präsentiert wird, dass sich die Tür in einer offenen Position befindet.

4. Verfahren nach Anspruch 1, wobei das Symbol für eine vorbestimmte Zeit dargestellt wird.

5. Verfahren nach Anspruch 4, wobei das Symbol in einer Art und Weise {Zirkumflex über (X)} dargestellt wird.

6. Verfahren nach Anspruch 1, das ferner einen vorherigen Kalibrierungsschritt umfasst, der das Platzieren eines Objekts mit der kalibrierten Signallänge und der maximalen Länge und das Erfassen der Position der kalibrierten Längen auf dem Bildschirm umfasst.

7. Vorrichtung zur Darstellung der Länge eines über das Heck eines Kraftfahrzeuges hinausragenden Objektes, wobei die Vorrichtung umfasst:
• einem Bildsensor (7) der hinteren Außenumgebung in der Nähe des Fahrzeugs;
• eine Bildanzeige (9) in Höhe des Fahrersitzes;
Die Vorrichtung ist **dadurch gekennzeichnet, dass**:
• Die Anzeige ist dazu eingerichtet, auf dem Bild ein Symbol (21, 23) darzustellen, das die zulässigen Längen für ein Objekt darstellt, das das Heck des Fahrzeugs überschreitet.

8. Kraftfahrzeug mit einer Vorrichtung nach Anspruch 7.

9. Computerplanprodukt, das von einem Rufnetz herunterladbar und/oder auf einem computerlesbaren Medium aufgezeichnet und/oder von einem Prozessor ausführbar ist, wobei es Plancodeanweisungen zur Implementierung des Präsentationsverfahrens nach mindestens einem der Ansprüche 1 bis 6 umfasst.

## Claims

1. Method for presenting the length of an object extending beyond the rear of a motor vehicle, the method comprising the steps of:
• acquisition (31) of an image of the rears outside environment close to the vehicle;
• presentation (33) of the image on a screen at the level of the vehicle driver's seat;
the method is **characterised in that** it further comprises a step of:
• display (35) on the screen of a symbol representing the permitted length limits for an object exceeding the rear of the vehicle.

2. Method as claimed in claim 1, wherein the symbol comprises at least a first line symbolizing the length from which the object must comprise a warning signal at its end and a second line symbolizing the maximum length permitted for an overshoot.

3. The method as claimed in claim 1, wherein the previous vehicle comprises a door in the rear of the vehicle, the symbol is presented only on detection that the door is in an open position.

4. The method as claimed in claim 1, wherein the symbol is presented for a predetermined time.

5. The method according to claim 4, wherein the symbol is presented in a manner {circumflex over (X)}.

6. The method as claimed in claim 1, further comprising a prior calibration step comprising placing an object with the calibrated signalling length and maximum length and detecting the position of the calibrated lengths on the screen.

7. Device for presenting the length of an object projecting beyond the rear of a motor vehicle, the device comprising:
• an image sensor (7) of the rears outside environment close to the vehicle;
• an image display (9) at the level of the driver's seat;
the device is **characterised in that**:
• the display is adapted to display on the image a symbol (21, 23) representing the permissible lengths for an object exceeding the rear of the vehicle.

8. Motor vehicle comprising a device according to claim 7.

9. computer plan product downloadable from a call network and/or recorded on a computer-readable medium and/or executable by a processor, wherein it comprises plan code instructions for implementing the presentation method according to at least one of claims 1 to 6.
